# EUROPEAN PATENT APPLICATION

(11) **EP 2 317 584 A1**
(43) Date of publication of application: **04.05.2011**
(21) Application number: 10184486.8
(22) Date of filing: 30.09.2010
(51) Int. Cl.: H01M 2/10, H01M 10/50, H01M 10/48

(54) **Battery power source**

(30) Priority: 29.10.2009 JP 2009249160
(71) Applicant: Hitachi Ltd., Tokyo 100-8280 (JP); Hitachi Vehicle Energy, Ltd., Ibaraki 312-0061 (JP)
(72) Inventor: Seto, Sadashi, Ibaraki 312-8503 (JP)
(74) Representative: MERH-IP Matias Erny Reichl Hoffmann

(57) **Abstract**

A battery power source includes: a chassis 3, in which a cooling air path is formed, with the chassis 3 comprising a cooling air inlet 300; a plurality of cells 2 arranged in the cooling air path; and a temperature sensor 4a that detects temperature at a cell 2. A through hole 302a for fixing sensor formed on a chassis wall and a groove 330 for wiring formed on an outer peripheral surface of the chassis wall are formed on the chassis 3. The temperature sensor 4a includes: a sensor section that is inserted from an outside of the chassis 3 and fixed to the through hole 302a for fixing sensor and a front end portion 401 of the sensor section thermally contacts a region to be measured of the cell 2; and a wire that is drawn from a portion, which is exposed to an outside of the chassis 3, of the sensor section and is set up inside a groove 330 formed on an outer peripheral surface of the chassis wall.

## Description

The present invention relates to a battery power source including a plurality of cells.

Japanese Laid Open Patent Publication No. 2002-25633 discloses a power source with a plurality of secondary battery cells housed in a chassis, which is provided with a temperature sensor so as to monitor cell temperature. For instance, a power source for a vehicle is provided with a temperature sensor drawn in the chassis through a cooling air inlet or the like so that a sensor element unit contacts the cell surface. In order to reduce thermal resistance so that the cell temperature can be accurately measured, a gap between the cell and the sensor element unit is filled with a gel with high thermal conductivity or the like, thereby improving thermal contact.

However, since the work includes steps of drawing a plurality of temperature sensors in which a sensor wire is attached to the sensor element unit into the chassis, causing each of the sensor element units to adhere the surface of the plurality of cells, and applying an adhesive or a highly heat conductive material, work efficiency is low and an increase in assembly cost becomes an issue. In addition, wiring of the sensor wire obstructs the ventilation.

A battery power source according to a first aspect comprises: a chassis, in which a cooling air path is formed, with the chassis comprising a cooling air inlet; a plurality of cells arranged in the cooling air path; and/or a temperature sensor that detects temperature at a cell, wherein: a through hole for fixing sensor formed on a chassis wall and a groove for wiring formed on an outer peripheral surface of the chassis wall are formed on the chassis; and the temperature sensor comprises: a sensor section that is inserted from an outside of the chassis and fixed to the through hole for fixing sensor and a front end portion of the sensor section thermally contacts a region to be measured of the cell; and/or a wire that is drawn from a portion, which is exposed to an outside of the chassis, of the sensor section and is set up inside a groove formed on an outer peripheral surface of the chassis wall.

According to a second aspect of the present invention, in the battery power source according to the first aspect, a highly heat conductive member may be provided so as to fill a gap between the front end portion of the sensor section and the region to be measured.

According to a third aspect of the present invention, in the battery power source according to the second aspect, the highly heat conductive member may be a cap-shaped member that is mounted so as to cover the front end portion of the sensor section and formed of an elastic highly heat conductive material.

According to a fourth aspect of the present invention, in the battery power source according to the first to third aspects, a cover that shields the front end portion of the sensor section from cooling air may be provided around the front end portion through a gap.

According to a fifth aspect of the present invention, the battery power source according to the second aspect may further comprise a thermal insulation cover that shields the front end portion of the sensor section and the region to be measured of the cell from cooling air, wherein: the highly heat conductive member may be a highly heat conductive filling material filling in a gap between the front end portion, the region to be measured and the thermal insulation cover.

According to a sixth aspect of the present invention, in the battery power source according to the first to fifth aspects, a position of the chassis in which the through hole for fixing sensor is formed may be set so that the front end portion of the sensor section inserted in the through hole for fixing sensor is positioned in a region in which cooling air is shielded by the cell to be measured.

According to a seventh aspect of the present invention, in the battery power source according to the first to fifth aspects, it is preferable that the sensor section comprises: a bottomed cylindrical case formed of a highly heat conductive material; a thermistor element arranged in a vicinity of a bottom portion in the case; and a highly heat conductive in-case filling material filled in a gap between the thermistor element and the case, and: a wire of the thermistor element is drawn out through an opening section of the case.

According to an eighth aspect of the present invention, in the battery power source according to the seventh aspect, the case may comprise a plurality of protruding portions, provided on an outer peripheral surface of the case which are fitted with the through hole for fixing sensor formed on the chassis wall so as to fix the case to the through hole for fixing sensor.

### BRIEF DESCRIPTION OF THE DRAWINGS

FIG. 1 is an external perspective view of a battery power source according to the present embodiment.
FIGS. 2A to 2C illustrate a temperature sensor in detail, in which FIG. 2A is a front view, FIG. 2B is a plan view, and FIG. 2C is an A-A sectional view.
FIGS. 3A and 3B illustrate the mounting structure of the temperature sensors, in which FIG. 3A is a plan view and FIG. 3B is a B-B sectional view.
FIGS. 4A and 4B illustrate another example of the temperature sensor mounting structure.
FIGS. 5A and 5B illustrate an assembly procedure of the temperature sensor.
FIGS. 6A and 6B illustrate an assembly procedure of the temperature sensor, showing a process following that shown in FIGS. 5A and 5B.
FIG. 7 illustrates an assembly procedure of the temperature sensor, showing a process following that shown in FIGS. 6A and 6B.
FIGS. 8A and 8B illustrates the shape of a groove, in which FIG. 8A depicts the first example and FIG. 8B depicts the second example.
FIG. 9 is a block diagram showing a vehicle drive system on which the battery power source of the present embodiment is mounted.

### DESCRIPTION OF PREFERRED EMBODIMENTS

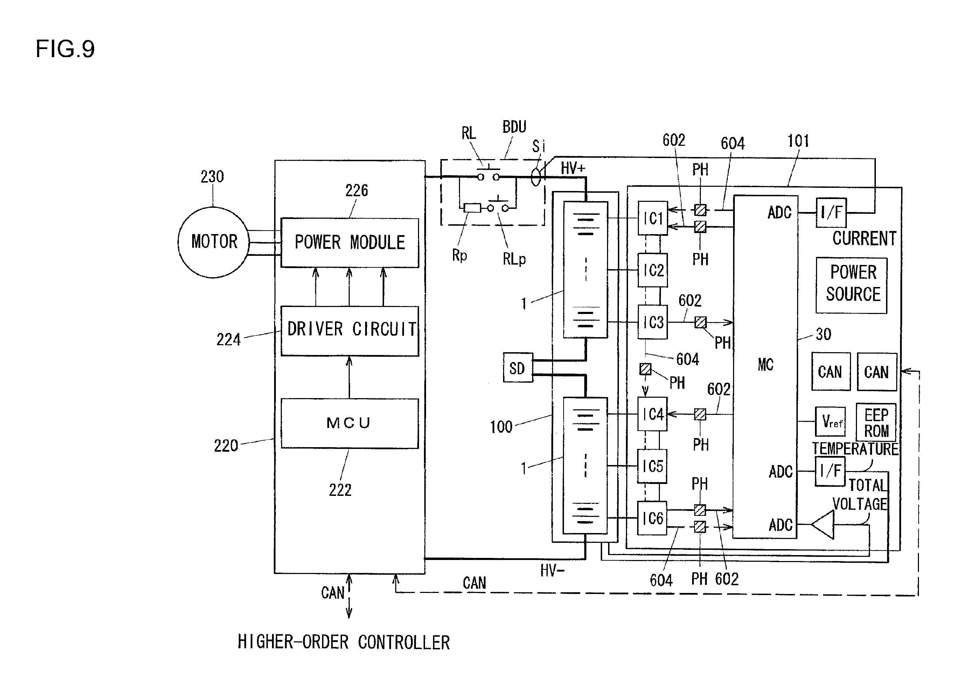

An embodiment of the present invention will now be explained with reference to the drawings. FIG. 9 is a block diagram showing a vehicle drive system on which a battery power source according to the present embodiment is mounted. The drive system shown in FIG. 9 includes a battery module 100, a battery monitoring device 101 that monitors the battery module 100, an inverter device 220 that converts DC power from the battery module 100 into three-phase AC power, and a vehicle drive motor 230. The motor 230 is driven by three-phase AC power from the inverter device 220. The inverter device 220 and the battery monitoring device 101 are connected via CAN (Controller Area Network), and the inverter device 220 works as a higher-order controller to the battery monitoring device 101. In addition, the inverter device 220 operates based upon an instruction information from a yet higher-order vehicle-side controller (not shown in the figures).

The inverter 220 includes a power module 226, an MCU 222, a drive circuit 224 via which the power module 226 is driven. The power module 226 converts the DC power supplied from the battery module 100 to three-phase AC power to be used to drive the motor 230. It is to be noted that when braking the vehicle, the inverter 220 executes regenerative braking control by engaging the motor 230 in operation as a generator, so as to charge the battery module 100 with the electric power regenerated through generator operation.

It is to be noted that although not shown in the figures, a large capacity smoothing capacitor with a capacity of approximately 700 µF to approximately 2000 µF is provided between a high-rate lines HV+ and HV- connected to the power module 226. A relay RL, a precharge relay RLP, a resistor RPRE, and an electric current sensor Si are provided in a battery disconnect unit BDU provided in high-rate line HV+. At the start of operation of the inverter 220, the smoothing capacitor holds substantially no electrical charge and, as the relay RLP is closed, a large initial current starts to flow in to the smoothing capacitor, and accordingly the relay RL may become fused and damaged. In order to prevent this, at the start of driving the motor 230, the precharge relay RLP is switched from the open state to the closed state so as to charge the smoothing capacitor, and then the relay RL is switched from the open state to the closed state so as to start electric power supply from the battery module 100 to the inverter device 220. The smoothing capacitor is charged by regulating the maximum current via the resistor RPRE.

When the motor 230 is to be engaged in power running, on the other hand, the MCU 222, in response to an instruction issued from a higher-order controller, controls the drive circuit 224 so as to generate a rotating magnetic field along the advancing direction relative to the rotation of the rotor in the motor 230 in order to control the switching operation at the power module 226. In this situation, DC power is supplied from the battery module 100 to the power module 226.

The battery module 100 is constituted with two battery power sources 1 to be described later connected in series. Each of the battery power sources 1 includes a plurality of cells connected in series. The two battery power sources 1 are connected in series via a service disconnect SD, which is constituted by serially connecting a switch and a fuse and is installed for purposes of maintenance/inspection. The battery monitoring device 101 performs mainly measurement of the voltages at the individual cells, measurement of the total voltage, measurement of the currents, adjustment of cell temperature and cell capacity, and the like. For this reason, an IC 1 to an IC 6 are provided as cell controllers. The plurality of cells provided in each of the battery power sources 1 are divided into three cell groups, and each cell group is provided with one IC.

The IC 1 to the IC 6 perform communication with a microcomputer 30 through an insulation element (for instance, photocoupler) PH in a daisy chain manner, and include a communication system 602 through which the cell voltage value is to be read and a variety of commands are to be transmitted and a communication system 604 through which only cell over-charge detection information is to be transmitted. In the example shown in FIG. 9, the communication system 602 is divided into a higher-order communication path for the IC 1 to the IC3 of the higher-order side battery power source 1 and a lower-order communication path for the IC4 to the IC 6 of the lower-order battery power source 1. The output from the electric current sensor Si in the battery disconnect unit BDU is input to the microcomputer 30. A signal related to the total voltage and temperature at the battery module 100 is also input to the microcomputer 30 and measured by an AD converter (ADC) of the microcomputer 30. A temperature sensor is provided at each of a plurality of places in the battery power sources 1.

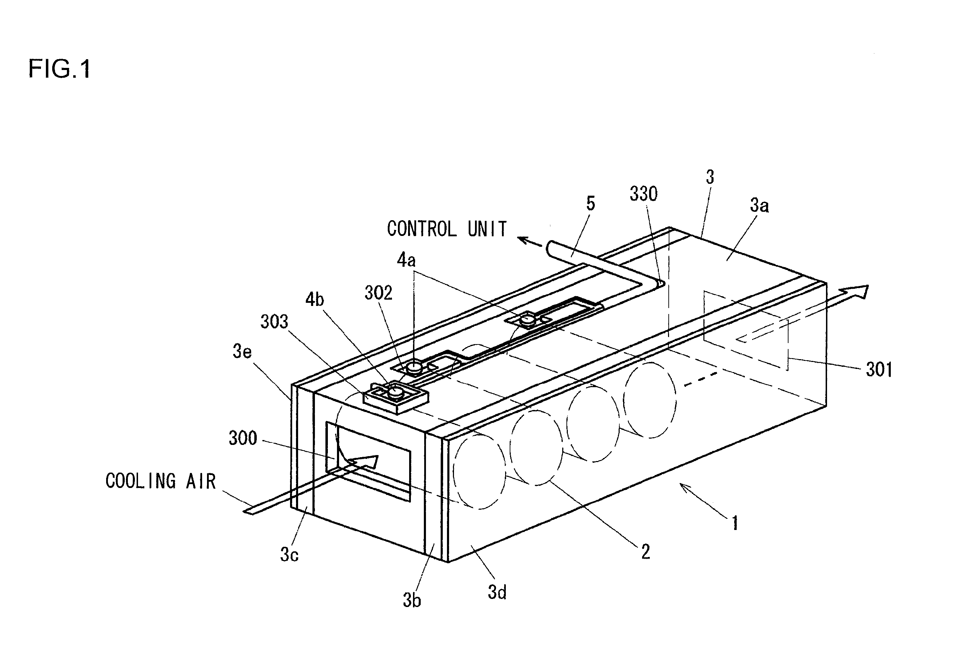

FIG. 1 is an external perspective view of the battery power source 1. The battery power source constitutes a battery assembly that includes a plurality of secondary battery (for example, lithium ion battery) cells 2. Although in the example shown in FIG. 1 cylinder shaped cells 2 are used, the present invention can be applied to a power source in which, a type of cells other than cylindrical ones, for example, prismatic cells are used. A cuboid-shaped chassis 3 is constituted with five chassis members 3a to 3e. In the present embodiment, the chassis members 3a to 3e are formed by resin molding. It is to be noted that a conductive material may be used for the chassis members 3a, 3d, and 3e.

A cooling air inlet 300 is formed on an end face in the lengthwise direction of the box-shaped chassis member 3a in which the cells are housed, and a cooling air outlet 301 is formed on the other end face. In other words, a cooling air path is formed along the lengthwise direction inside the chassis member 3a. It is to be noted that although in the cell array shown in FIG. 1 one array of the cells 2 is provided in lengthwise direction of the chassis, two cells 2 arrayed in series, for instance, may be arranged side by side in lengthwise direction, and moreover, the cells 2 may be arrayed in two rows, upper and lower, or more.

In the chassis member 3a in which the cells are housed, each of the cells 2 is disposed such that its both end faces on which electrodes are formed face opposite to the side surfaces of the chassis member 3a, i.e., surfaces on which the chassis members 3b and 3c are fixed , respectively. The plurality of cells 2 are arranged in a row along the cooling air path in the chassis member 3a. The heat dissipation efficiency at each of the cells 2 is thus improved by arranging the cells in the direction of the flow of the cooling air.

The chassis members 3b and 3c, which work as a side plate on which a busbar (not shown in the figures) is mounted, are mounted on the side surface sides of the chassis member 3a. The cells 2 are connected with one another through the busbar. The chassis members 3d and 3e are mounted on the outside of the chassis members 3b and 3c, respectively, as a cover to prevent the busbar of the chassis members 3b and 3c from being exposed.

A temperature sensor 4a for detecting the temperature at the cells 2 and a temperature sensor 4b for detecting the temperature of the cooling air in the cooling path are fixed in the top surface of the chassis member 3a. The temperature sensors 4a and 4b will be described later in detail. The temperature sensors 4a and 4b are inserted into the chassis from the outside of the chassis member 3a, and fixed on the top surface. A temperature detector is provided at the front end of the inserted temperature sensors 4a and 4b. A harness 5 of the temperature sensors 4a and 4b is connected to a control unit not shown in the figures that monitors the state of battery.

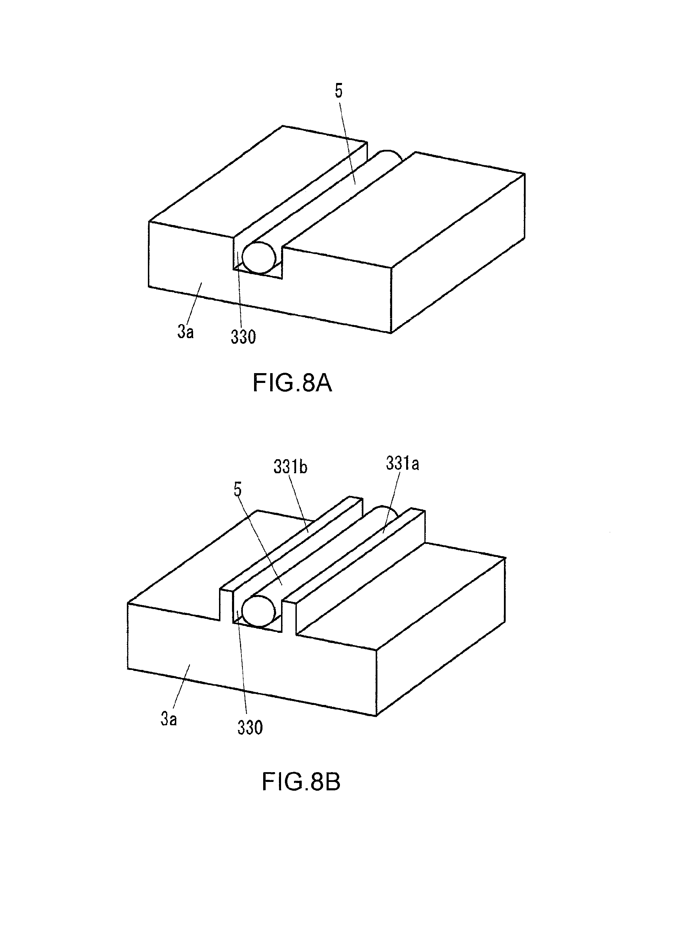

A groove 330, in which the harness 5 of the temperature sensors 4a and 4b is wired, is formed on the top surface of the chassis member 3a. In the example shown in FIG. 1, the groove 330 is formed by hollowing the outer surface of the chassis member 3a as in FIG. 8A. However, the groove 330 may be formed by erecting a pair of protruding portions 331a and 331b on the outer surface of the chassis member 3a as shown in FIG. 8B. It is to be noted that although in FIG. 1 the groove 330 is formed on the chassis member 3a, since it is provided in accordance with the form of wiring of the harness 5, the groove 330 may be formed on the chassis members 3b to 3e where appropriate other than on the chassis member 3a.

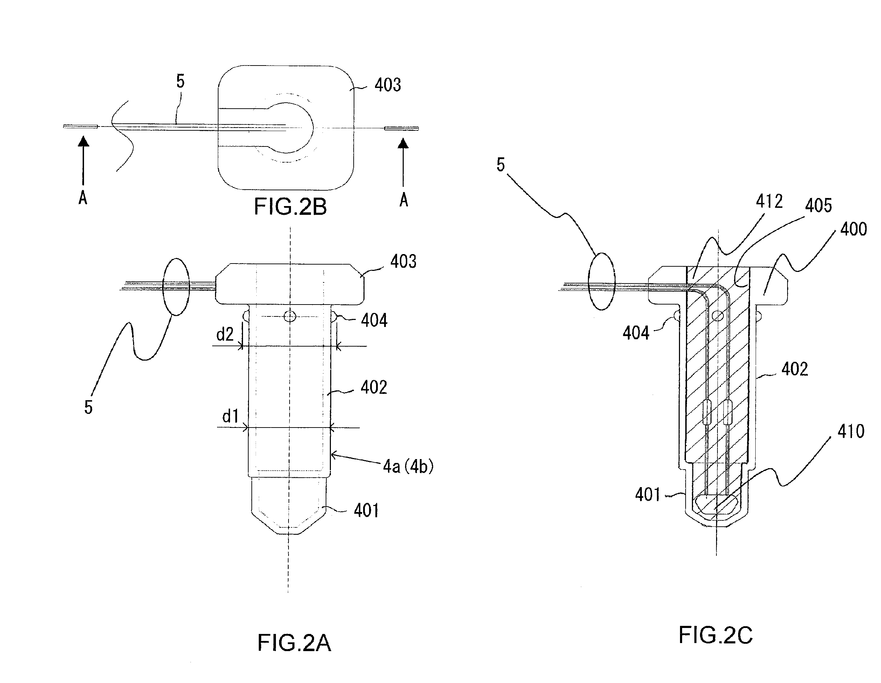

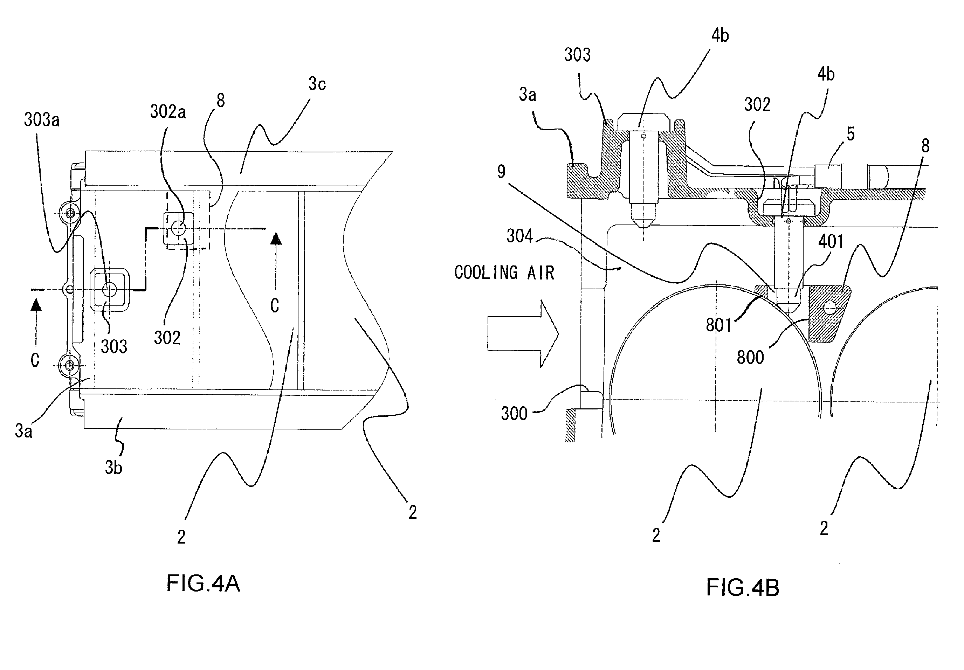

FIGS. 2A to 2C illustrate the temperature sensor 4a in detail. It is to be noted that the temperature sensor 4b has the identical structure to that of the temperature sensor 4a. FIG. 2A is a front view of the temperature sensor 4a, FIG. 2B is a plan view of the temperature sensor 4a, and FIG. 2C is an A-A sectional view. As shown in FIG. 4A, the stick-like temperature sensor 4a is divided into a front end portion 401, a body portion 402, and a head portion 403. The cross-sectional shape of the front end portion 401 and the body portion 402 is round whilst that of the head portion 403 is a substantially square. The outer diameter of the front end portion 401 is set to less than that of the body portion 402. A plurality of protruding portions 404 are formed on the outer peripheral surface on the top end side of the body portion 402.

As shown in the A-A cross-section of FIG. 2C, the temperature sensor 4a includes a thermistor element 410 housed in a casing 400 on which a hole 405 is formed. The thermistor element 410 is housed in the front end portion 401 of the casing 400. The harness 5 of the thermistor element 410 is drawn out to the side of the head portion 403 through the body portion 402. The thickness of the casing 400 is small in the front end portion 401 and the body portion 402, and the inside of the hole 405 in which the thermistor element 410 is housed is filled with a filling material 412. The casing 400 is preferably highly heat conductive and is formed with an electrically insulating material, for instance, PBT (Polybutylene terephthalate. In addition, the filling material 412 is also preferably highly heat conductive, and an epoxy resin, for example, may be used.

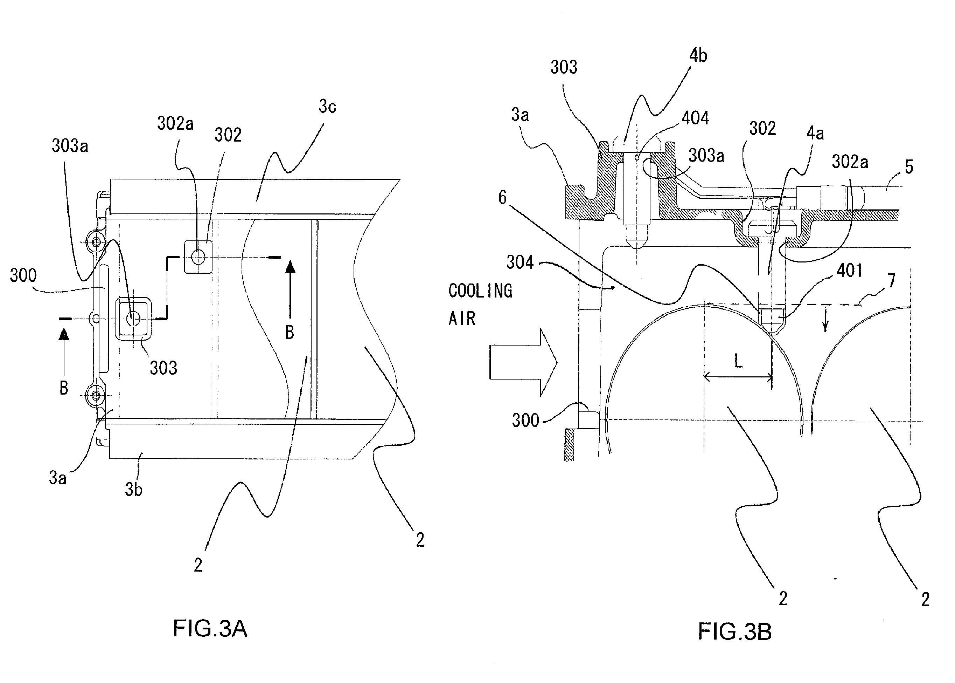

FIGS. 3A and 3B illustrate the mounting structure of the temperature sensors 4a and 4b, in which FIG. 3A is a plan view and FIG. 3B is a B-B sectional view. It is to be noted that in FIG. 3A, the temperature sensors 4a and 4b are not illustrated and a part of the chassis member 3 a is illustrated in fracture cross-section in the interests of brevity of the structure of the chassis member 3a. A recessed portion 302 and a protruding portion 303 are formed on the outer peripheral surface of the chassis member 3a as shown in FIG. 3B. A through hole 302a, through which the temperature sensor 4a is mounted, is formed on the recessed portion 302, and a through hole 303a, through which the temperature sensor 4b is mounted, is formed on the protruding portion 303. The through holes 302a and 303a have the same diameter, which is set to greater than a diameter d1 of the body portion 402 shown in FIG. 2A and set to less than a diameter d2 of the protruding portion 404.

The temperature sensor 4a is mounted on the chassis member 3a by placing in advance a cap 6, formed with a highly heat conductive elastic material, on the front end portion 401 of the temperature sensor 4a and then inserting the temperature sensor 4a into the through hole 302a from the outside of the chassis member 3a. At this time, since the outer diameter d2 of the protruding portion 404 of the temperature sensor 4a is greater than the inner diameter of the through hole 302a, the temperature sensor 4a is pushed inside the chassis until the lower surface of the head portion 403 of the casing 400 abuts against the bottom surface of the recessed portion 302, so that one or both of the protruding portions 404 and the through hole 302a are deformed and the temperature sensor 4a is fitted. As a result, the temperature sensor 4a is fixed to the chassis member 3a. The same is true for the fixing structure of the temperature sensor 4b.

When the temperature sensor 4a is pushed into and fixed to the through hole 302a, the front end portion 401 abuts against the cell 2. In this case, since the cap 6 is already attached to the front end portion 401, the temperature sensor 4a abuts against the case side surface of the cells through the cap 6. It is to be noted that although the cap 6 is not always necessary, the cap 6 formed with an elastic material can be deformed with ease, and therefore, even if a position error occurs between the front end portion 401 and the cell 2 due to an assembly error of the cells 2 or the like, the error can be absorbed with the deformation of the cap 6. In addition, a slight change in the relative position of the cell 2 and the front end portion 401 often occurs with vehicle vibration when the battery power source 1 is mounted on a vehicle, and such change can also be absorbed with deformation of the cap 6. As a result, the thermal contact condition between the front end portion 401 and the cell 2 can be maintained well. It is to be noted that the cap 6 is formed from, for instance, silicon rubber or the like.

In addition, as shown in FIG. 3B, the position of the through hole 302a, through which the temperature sensor 4a is mounted, is shifted by a distance L downwind further than the central axis of the cylindrical cell 2 relative to the flow of cooling air. This arrangement allows the front end portion 401 of the temperature sensor 4a to be placed lower than a dashed line 7 as shown in FIG. 3B. The dashed line 7 is a horizontal line passing through the top of the cell side surface, and the region below the dashed line 7 is in the shadow (back side) of the cell 2 relative to cooling air. The front end portion 401 is therefore set up in this region so as to reduce the effect of cooling air on temperature measurement, as shown in FIG. 3B. While, in a conventional structure in which a sensor element unit adheres on a cell surface, measurement accuracy is often reduced by change in the mounting state of the temperature sensor with the vehicle vibration described above, such disadvantage can be eliminated in the present embodiment.

On the other hand, the temperature sensor 4b, which detects the temperature in a cooling air path 304, is mounted to the through hole 303a formed on the protruding portion 303. The temperature sensor 4b is mounted in the same manner as that of the temperature sensor 4a described above. Unlike in the case of the temperature sensor 4a, it is not necessary to insert the front end portion 401 into the chassis until it reaches the vicinity of the side surface of the cells 2 in the case of the temperature sensor 4b. Therefore, the protruding portion 303 is provided so as to place the front end portion 401 in an appropriate position in the cooling air path. In addition, it is not necessary to put the cap 6 on the front end portion 401 of the temperature sensor 4b.

While FIGS. 3A and 3B show a mounting structure in which a position error between the front end portion 401 of the temperature sensor 4a and the cell 2 is absorbed by deformation of the cap 6, FIGS. 4A and 4B show another example that has the similar function. FIG. 4A is a plan view similar to FIG. 3A, and FIG. 3B is a C-C sectional view. The difference with the structure shown in FIGS. 3A and 3B lie in that the temperature sensor 4a is provided with a thermal insulation case 8, filled with a highly heat conductive material 9, in place of the cap 6, and the other structure is the same as that shown in FIGS. 3A and 3B.

The thermal insulation case 8 is formed with, for example, a thermal insulation member such as EPDM (Ethylene Propylene Methylene Linkage), and fixed to any of the chassis members 3a to 3c in advance. In the example shown in FIGS. 4A and 4B, the thermal insulation case 8 is screwed inside the chassis member 3c, namely, inside the chassis 3. A hole 800 through which the front end portion 401 of the temperature sensor 4a is inserted is formed on the thermal insulation case 8. The thermal insulation case 8 is fixed to the chassis member 3c so that the center of the hole 800 is located at the position of the front end portion 401 of the temperature sensor 4a fixed to the chassis member 3a. In addition, a surface 801, which faces opposite to the side surface of the cell 2, of the thermal insulation case 8 forms a curved surface similar to the side surface of the cell 2.

The highly heat conductive material 9 is filled in the hole 800, through which the front end portion 401 has been inserted. As a result, since, even if there is a gap between the front end portion 401 and the cell 2, the highly heat conductive material 9 is filled in the gap, heat transfer performance between the front end portion 401 and the cell 2 can be improved. In addition, since the highly heat conductive material 9 covers the whole front end portion 401 and contacts the side surface of the cell 2, the heat transfer amount in a path from the cell 2 through the highly heat conductive material 9 to the front end portion 401 increases, thereby allowing more accurate temperature measurement.

In addition, the temperature measuring front end portion 401 is covered with the thermal insulation case 8 formed of a thermal insulation member so as to reduce heat dissipation or heat penetration from the front end portion 401 to the cooling air, thereby improving the temperature measurement accuracy. In the structure shown in FIG. 4B, since the thermal insulation case 8 is placed behind the cell 2 relative to the flow of cooling air, the effect of cooling air can be reduced and turbulence in the flow of cooling air which results from the thermal insulation case 8 being as an obstruct can be reduced. It is to be noted that also in the case of the front end portion 401 mounted with the cap 6 as shown in FIG. 3B, the effect of cooling air can similarly be reduced by providing the thermal insulation case 8, however, the highly heat conductive material 9 is not filled.

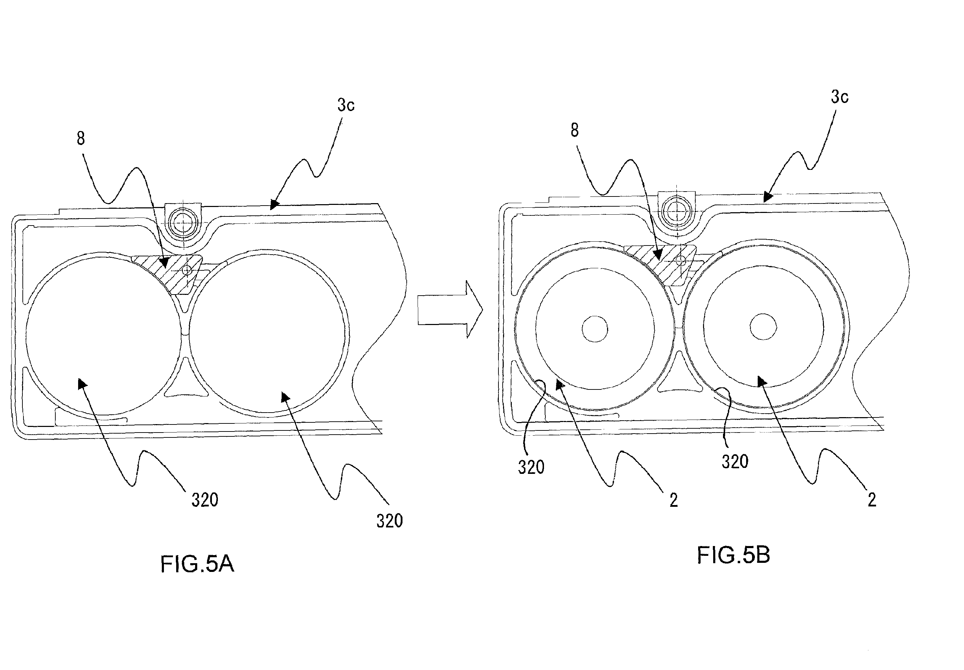

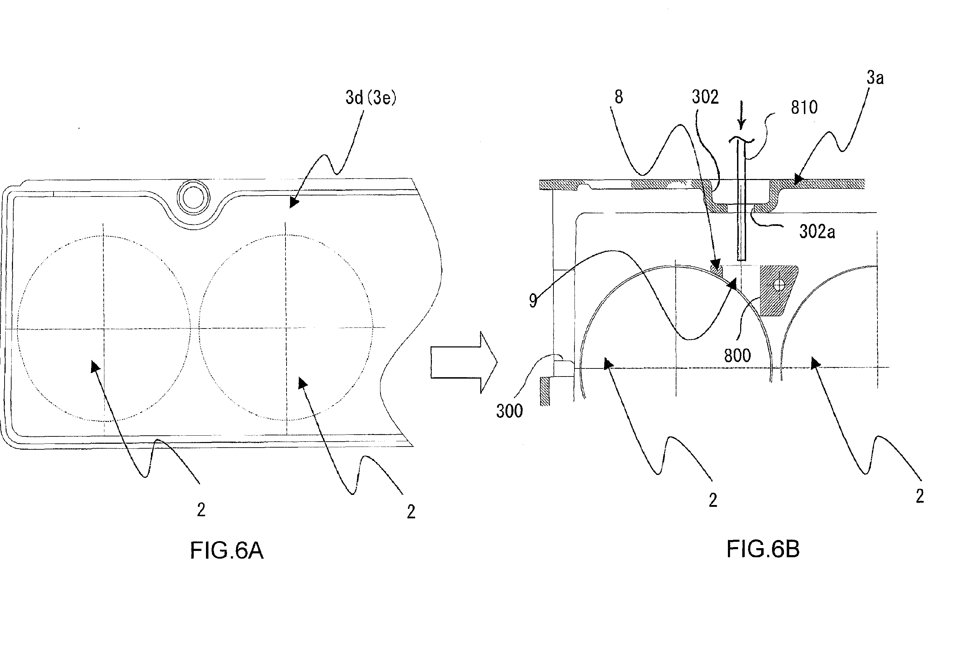

FIG. 5A to FIG. 7 illustrate assembly procedures of the temperature sensor. In a process shown in FIG. 5A, the thermal insulation case 8 is fixed to the chassis member 3c. Cell housing sections 320, which are openings through which the cells 2 are housed, is formed on the chassis member 3c. Following that, the chassis members 3b and 3c are fixed to the chassis member 3a, and then the cells 2 are placed in the chassis 3 so that the cells 2 are housed through the cell housing sections 320 of the chassis member 3c as shown in FIG. 5B. Next, the chassis members 3d and 3e are mounted as shown in FIG. 6A. After that, the through hole 302a, through which the temperature sensor 4a is mounted, is used so as to fill the highly heat conductive material 9 in the hole 800 of the thermal insulation case 8. An inlet pipe 810 is inserted into the chassis 3 through the through hole 302a so as to fill the highly heat conductive material 9 as shown in FIG. 6B for instance.

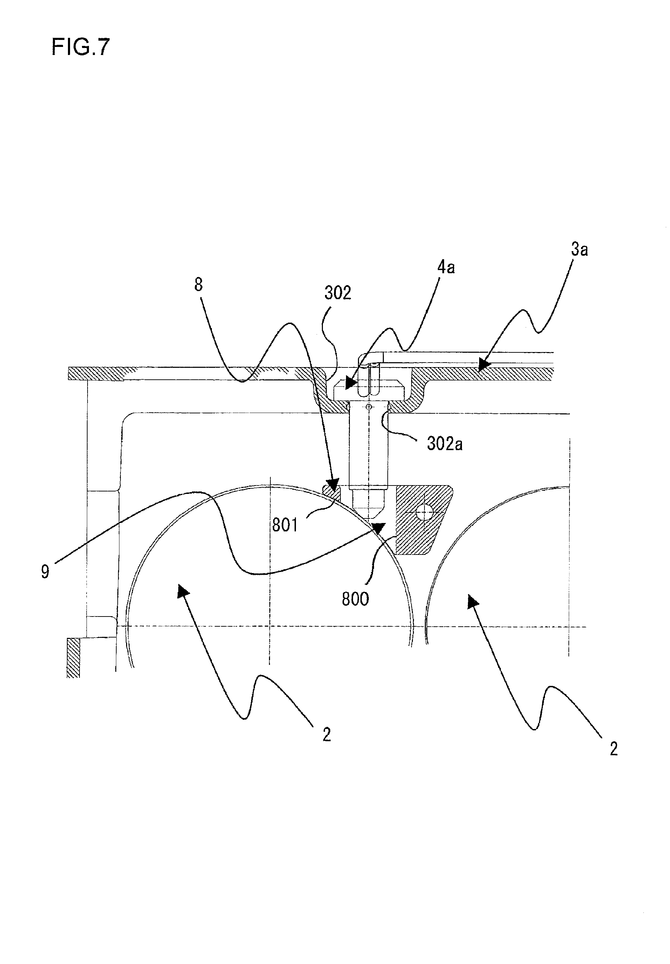

Following that, the temperature sensor 4a is inserted into the through hole 302a from the outside of the chassis 3 and fixed to the through hole 302a as shown in FIG. 7. As a result, the front end portion 401 is housed in the hole 800 of the thermal insulation case 8, and the highly heat conductive material 9 is placed with no gap between the front end portion 401 and the cell 2.

In the present embodiment, as explained above, the temperature sensor 4a is inserted from the outside of the chassis 3 into the through hole 302a through which the sensor is fixed, which is formed on the chassis wall, and fixed with respect to the plurality of cells 2 arranged in the cooling air path, so that the front end, namely, the front end portion 401, of the sensor sections 401 to 403 thermally contacts the region of the cell 2 to be measured. Accordingly, unlike in a conventional way, a work to fix a sensor element unit on a cell surface in the chassis is not required and thus a sensor can be mounted with ease. In addition, since the sensor wiring, i.e., the harness 5, is arranged to be drawn from the portion, i.e., the head portion 403, exposed outside the chassis of the sensor section and set up in the groove 330 for wiring formed on the outer peripheral surface of the wall of the chassis 3, i.e., the chassis portion 3a, wiring in the chassis as in a conventional way is not required, thereby improving efficiency of sensor mounting work.

In addition, the highly heat conductive member, i.e., the highly heat conductive material 9 and the cap 6, is provided so as to fill the gap between the front end, i.e., the front end portion 401, of the sensor section and the region of the cell 2 to be measured, thereby reducing thermal resistance between the temperature sensor 4a and the region to be measured and resulting in accurate temperature measurement.

In particular, since the cap 6, which is placed so as to cover the front end, i.e., the front end portion 401, of the sensor section, is used as a highly heat conductive member, the highly heat conductive member can be disposed with ease between the front end portion 401 and the region of the cell 2 to be measured. In addition, since the cap 6 is formed with an elastic highly heat conductive member, a change in gap size resulting from an assembly error, vibrations, or the like, can be followed with ease, thereby allowing a good thermal contact state to be maintained.

In addition, the cover, i.e., the thermal insulation case 8, that shields the front end, i.e., the front end portion 401, of the sensor section from the cooling air is provided around the front end through a gap, and thus the effect of cooling air on temperature measurement can be reduced and temperature measurement accuracy can be improved.

In addition, the thermal insulation cover, i.e., the thermal insulation case 8, that shields the front end, i.e., the front end portion 401, of the sensor section and the region to be measured of the cell 2 from the cooling air is provided and the highly heat conductive gap filling material, i.e., the highly heat conductive material 9, is filled in the gap between the thermal insulation cover, the front end portion and the region to be measured, and hence the thermal resistance between the sensor 4 and the cell 2 can be reduced, the effect of cooling air can be reduced, and highly accurate temperature measurement can be achieved.

In addition, the position of the chassis 3 in which the through hole 302a is formed is set so that the front end, i.e., the front end portion 401, of the temperature sensor 4a which has been inserted in the through hole 302a is positioned in a region in which the cooling air is shielded by the cell 2 to be measured. This allows the effect of cooling air on temperature measurement to be reduced.

In addition, the temperature sensor 4a is constituted by arranging the thermistor, i.e., the thermistor element 410, in the vicinity of the bottom portion of the bottomed cylindrical case, i.e., the casing 400, formed of a highly heat conductive material and by filling the highly heat conductive in-case filling material, i.e., the filling material 412, in the gap between the thermistor element 410 and the casing 400, and the temperature sensor 4a can thus be mounted in the through hole 302a with ease.

In addition, since the plurality of protruding portions 404 are provided on the outer peripheral surface of the case and the protruding portions 404 are fitted with the through hole 302a through which the sensor is fixed so as to fix the case, i.e., the casing 400, to the through hole 302a, the temperature sensor 4a can be fixed to the chassis 3 with ease and workability in assembly can thus be improved.

The embodiments described above may be adopted by themselves or in combination. The advantages of the individual embodiments may be realized independently of one another or synergistically through combination thereof. In addition, the present invention may be embodied in any way other than those described in reference to the embodiments, as long as the features characterizing the present invention remain intact.

According to the embodiments of the present invention, sensor wiring is prevented from being an obstruction of ventilation and workability in assembly of the temperature sensor is improved.

## Claims

1. A battery power source, comprising:
a chassis (3), in which a cooling air path is formed, with the chassis (3) comprising a cooling air inlet (300);
a plurality of cells (2) arranged in the cooling air path; and
a temperature sensor (4a) that detects temperature at a cell, wherein:
a through hole (302a) for fixing sensor formed on a chassis wall and a groove (330) for wiring formed on an outer peripheral surface of the chassis wall are formed on the chassis (3); and
the temperature sensor (4a) comprises:
a sensor section that is inserted from an outside of the chassis (3) and fixed to the through hole (302a) for fixing sensor and a front end portion (401) of the sensor section thermally contacts a region to be measured of the cell (2); and
a wire that is drawn from a portion, which is exposed to an outside of the chassis (3), of the sensor section and is set up inside a groove (330) formed on an outer peripheral surface of the chassis wall.

2. A battery power source according to claim 1, wherein:
a highly heat conductive member is provided so as to fill a gap between the front end portion (401) of the sensor section and the region to be measured.

3. A battery power source according to claim 2, wherein:
the highly heat conductive member is a cap-shaped member that is mounted so as to cover the front end portion (401) of the sensor section and formed of an elastic highly heat conductive material.

4. A battery power source according to any one of claims 1 to 3, wherein:
a cover that shields the front end portion (401) of the sensor section from cooling air is provided around the front end portion (401) through a gap.

5. A battery power source according to claim 2, further comprising:
a thermal insulation cover that shields the front end portion (401) of the sensor section and the region to be measured of the cell (2) from cooling air, wherein:
the highly heat conductive member is a highly heat conductive filling material filling in a gap between the front end portion (401), the region to be measured and the thermal insulation cover.

6. A battery power source according to any one of claims 1 to 5, wherein:
a position of the chassis (3) in which the through hole (302a) for fixing sensor is formed is set so that the front end portion (401) of the sensor section inserted in the through hole (302a) for fixing sensor is positioned in a region in which cooling air is shielded by the cell (2) to be measured.

7. A battery power source according to any one of claims 1 to 5, wherein:
the sensor section comprises:
a bottomed cylindrical case (400) formed of a highly heat conductive material;
a thermistor element (410) arranged in a vicinity of a bottom portion in the case (400); and
a highly heat conductive in-case filling material (412) filled in a gap between the thermistor element (410) and the case (400), and:
a wire of the thermistor element (410) is drawn out through an opening section of the case (400).

8. A battery power source according to claim 7, wherein:
the case (400) comprises a plurality of protruding portions (404), provided on an outer peripheral surface of the case (400) which are fitted with the through hole (302a) for fixing sensor formed on the chassis wall so as to fix the case (400) to the through hole (302a) for fixing sensor.
